Europäisches Patentamt

European Patent Office

Office européen des brevets

(11) Veröffentlichungsnummer: **0 160 661**
**B1**

# EUROPÄISCHE PATENTSCHRIFT

(45) Veröffentlichungstag der Patentschrift:
26.11.86

(51) Int. Cl.⁴: **B 65 G 53/52**

(21) Anmeldenummer: 84903539.9

(22) Anmeldetag: 01.09.84

(86) Internationale Anmeldenummer:
PCT/EP 84/00265

(87) Internationale Veröffentlichungsnummer:
WO 85/01276 (28.03.85 Gazette 85/06)

(54) VORRICHTUNG ZUM PNEUMATISCHEN UND HYDRAULISCHEN FÖRDERN VON SCHÜTTGUT.

(30) Priorität: 15.09.83 DE 3333261

(43) Veröffentlichungstag der Anmeldung:
13.11.85 Patentblatt 85/46

(45) Bekanntmachung des Hinweises auf die Patenterteilung:
26.11.86 Patentblatt 86/48

(84) Benannte Vertragsstaaten:
AT BE CH DE FR GB LI NL SE

(56) Entgegenhaltungen:
DE-A-1 506 848
DE-A-2 102 301
US-A-1 676 078

Aufbereitungstechnik, Partec & Power Tech.
(Nürnberg, DE) 25. Jahrgang, 4. April 1984, "Möller
Turbuflow Energiesparend, langsam und schonend
pneumatisch fördern"

(73) Patentinhaber: Johannes Möller Hamburg GmbH
& Co. KG, Schillerstrasse 43, D-2000 Hamburg 50
(DE)

(72) Erfinder: MÖLLER, Hermann, Klövensteenweg 66,
D-2000 Hamburg 56 (DE)
Erfinder: MUSCHELKNAUTZ, Edgar, Rumpffstrasse
33, D-5090 Leverkusen (DE)
Erfinder: PUST, Jürgen, Gerhard- Hauptmann- Platz
12, D-2000 Wedel/Holstein (DE)

(74) Vertreter: Minetti, Ralf, Dipl.- Ing., Ballindamm 15,
D-2000 Hamburg 1 (DE)

LIBER, STOCKHOLM 1986

### Beschreibung

Die Erfindung betrifft eine Vorrichtung zum pneumatischen oder hydraulischen Fördern von staubförmigem, pulverigem oder körnigem Schüttgut, bestehend aus einer Förderleitung mit einem darin angeordneten achsparallelverlaufenden Innenrohr, das mit Auslaß- und Einlaßöffnungen versehen ist. Eine derartige Vorrichtung ist aus der DE-A- 2 102 301 bekannt.

Nach der DT-C- 1 174 258 ist es bekannt, ein staubförmiges oder körniges Schüttgut in einem Rohr zu fördern, bei dem der Hauptstrom in Längsrichtung der Strömung an vielen, in geringen Abständen aufeinanderfolgenden Stellen teilweise abgezweigt wird und der die jeweilige Abzweigung getrennt vom Hauptstrom durchfließende Teilstrom kurz vor der in Strömungsrichtung gesehen nächsten Abzweigstelle wieder in den Hauptstrom eingeleitet wird. Dafür wurde eine Vorrichtung mit einer Förderleitung und parallelen Abzweigleitung vorgeschlagen, die beidendig in die Förderleitung einmündet, wobei viele solcher kurzer Abzweigleitungen in Längsrichtung der Rohrleitung neben dieser angeordnet sind. Sie können dabei auch innerhalb des Förderrohres angeordnet sein. Dabei wird davon ausgegangen, daß das Fördergut in sogenannten Gutpfropfen zu transportieren ist. Das ist bei der bekannten Anordnung möglich, wenn es sich um die Förderung eines feinkörnigen Schüttgutes handelt. Bei Schüttgütern, die zur Bildung eines leichten Wandansatzes neigen oder die Teilchen von einigen Millimetern Durchmesser umfassen, besteht hingegen die Gefahr einer Verstopfung der engen Abzweigleitungen, so daß diese wirkungslos werden. Nach einer jüngeren Entwicklung entsprechend der DT-C- 15 06 848 wurde an Stelle vieler kurzer Abzweigleitungen eine durchgehende Nebenleitung neben der Hauptförderleitung vorgesehen, die mit Ein- und Austrittsöffnungen versehen ist, welche im Abstand zueinander angeordnet sind. Zwischen diesen gleichgroßen Ein- und Austrittsöffnungen befindet sich eine Absperrung der Nebenleitung, so daß das gesamte Fördermedium der Nebenleitung in Abständen in die Hauptförderleitung und aus dieser wieder heraus in die Nebenleitung eingeleitet wird. Eine derartige Ausbildung ist zwar weniger aufwendig als die Anordnung einer Vielzahl voneinander unabhängiger Abzweigleitungen neben der Hauptförderleitung. Die Anordnung ist jedoch lediglich dafür geeignet, beim Festsitzen eines Schüttgutpfropfens in der Förderleitung, diesen zu spalten für eine weitere Förderung, denn wenn die Förderung des Materials normal verläuft, so fließt die Förderluft zum größten Teil in der Hauptförderleitung, weil sie keine Veranlassung hat, durch den Nebenkanal bzw. die Nebenleitung zu fließen, da diese einen wesentlich höheren Strömungswiderstand aufweist. Erst wenn die Förderung in der Hauptförderleitung aussetzt beispielsweise durch Festsitzen eines Schüttgutpfropfens, so gelangt die Förderluft in den Nebenkanal und kann diesen an den Stellen oder muß ihn an den Stellen verlassen, wo ein Schüttgutpfropfen festsitzt. Gleiches wird auch angestrebt mit der eingangs zitierten Anordnung (DT-A- 2 102 301), bei der die Nebenleitung nicht vollständig an den Stellen abgesperrt ist, an denen sich jeweils eine Austritts- und eine Eintrittsöffnung befinden. Nach dieser Druckschrift ist es bekannt, zur Ausbildung einer Austrittsöffnung eine erste Zunge bodenseitig schräg gegen den Förderstrom gerichtet in den Nebenkanal hineinreichend auszubilden und dahinter eine zweite Zunge in der gleichen Richtung für die Ausbildung einer Wiedereintrittsöffnung. Mit dieser Gestaltung soll ebenfalls erreicht werden, bei Ausbildung von festsitzenden Gutpfropfen in der Förderleitung die Möglichkeit zu geben, über die Zuführung von Förderluft aus der Nebenleitung ein Aufspalten eines Schüttgutpfropfens zu erreichen. Ein wesentlicher Nachteil dieser Ausgestaltung ist jedoch darin zu sehen, daß die Strömung in der Nebenleitung durch die Zungen an die Oberseite der Nebenleitung abgelenkt wird und dort einen Verschleiß hervorruft durch das Auftreten von Turbulenzen, wobei zu berücksichtigen ist, daß sich in der Nebenleitung hohe Geschwindigkeiten der Förderluft einstellen, die ihrerseits körniges Material mit sich führt. Sich daraus ergebende Reparaturen sind jedoch sehr aufwendig. Ein weiterer Nachteil ist darin zu sehen, daß die in die Nebenleitung hineinragenden Zungen entweder überhaupt nicht oder nur mit einem großen Aufwand nachträglich in ihner Stellung verändert werden können, was möglich sein sollte für die Förderung verschiedener Arten von Fördergut. Allgemein kann jedoch auch zu dieser vorbekannten Anordnung festgestellt werden, daß sie nur insoweit eine punktuelle Wirkung mit ihren Einund Auslaßöffnungen der Nebenleitungen erzielt, als an diesen Stellen die Auflsöung eines festsitzenden Schüttgutpfropfen möglich sein mag, daß sie andererseits aber nicht geeignet ist, durch die vorgesehenen Mittel die Bildung von Schüttgutpfropfen zu verhindern und daß derartiges bei den vorbekannten Anordnungen auch nicht erreicht werden soll, weil diese von einer Förderung des Schüttgutes in der Form von pfropfen ausgehen.

Aufgabe der Erfindung ist es, eine Vorrichtung zu schaffen, bei der das Schüttgut im Förderrohr fortlaufend so stark verwirbelt wird, daß von vornherein nicht die Bildung festsitzender Gutspfropfen zu befürchten ist, andererseits jedoch die Möglichkeit besteht, auch in derartigen Fällen noch eine Abhilfe durch Auflösung des festsitzenden Gutspfropfen zu schaffen. Dies soll erreicht werden, ohne daß die Gefahr von Beschädigungen der Wandung der Nebenleitung durch eine Umlenkung der Förderluft oder eines andersartigen Fördermittels wie einem flüssigen Fördereinrichtunggegeben ist. Nach der Erfindung ist als Lösung vorgesehen, daß in dem Innenrohr zwischen einer Auslaß- und einer Einlaßöffnung eine senkrechtstehende Scheibe angeordnet ist, die mit mindestens einer Öffnung versehen ist, durch welche ein Teilstrom der Nebenleitung hindurchtreten kann, ohne daß er dabei gegen die Wandung der Innenleitung abgelenkt wird. Die Öffnung der Scheibe besteht dabei regelmäßig aus einem kreisrunden Loch, das in der Mitte der Scheibe oder auch exzentrisch angeordnet sein kann. Andererseits kann die Öffnung jedoch auch aus mehreren Löchern oder einem oder mehreren Schlitzen bestehen. Die Größe der Öffnung sollte jedenfalls etwa 0,1 - 0,3 der Fläche des Innenrohres betragen.

Der Durchmesser der Scheibe kann größer sein als das Innenrohr selber, so daß eine stärkere Ablenkung des Förderstromes in den Hauptstrom hervorgerufen wird und damit die Bildung stärkerer Turbulenzen, welche die Bildung von Gutspfropfen in der Förderleitung vermeiden. Wenn diese Scheibe größer als der Außendurchmesser der Nebenleitung ist, wird die Turbulenz der Hauptströmung durch den herausragenden Teil auch dann verstärkt, wenn gerade durch ungünstige Umstände, nämlich Druckunterschiede, nur ein geringer Förderluftstrom durch die Nebenleitung fließt. Dazu kann die Scheibe auch höhenverstellbar gelagert sein, damit sie den jeweils gegebenen Verhältnissen in ihrer Stellung anzupassen ist.

Um die Wirkung der aus der Austrittsöffnung des Innenrohres austretenden Luft auf den gesamten Querschnitt der Förderleitung zu verbessern und damit eine Verwirbelung des Schüttgutes zur Vermeidung von Gutspfropfen zu verbessern, hat es sich als vorteilhaft herausgestellt, wenn die Austrittsöffnung einen schrägen Anschnitt aufweist, so daß der Hauptstrom in Richtung des längsten Auflockerungsweges austritt. Darüber hinaus kann die Austrittsöffnung größer ausgebildet sein, als die nachfolgende Einlaßöffnung. Dafür kann sie tiefer in das Innenrohr hineinragen oder einen anderen, nämlich einen kleineren Anschnittwinkel haben, als die Öffnung des Einlasses.

Eine Möglichkeit einer nachträglichen Veränderung der Austritts- und Eintrittsöffnungen ergibt sich auch aus der Maßnahme, die Scheibe mit ihrer Öffnung in eine Muffe einzulegen oder einzupressen, in die die beiden Enden der Innenleitung hineingesteckt sind, weil es diese Anordnung ermöglicht, sowohl Muffen verschiedener Länge als auch Scheiben mit verschiedener Öffnungsgröße leicht gegen einander auszutauschen.

Auch an der Muffe kann eine in das Förderrohr hineinragende Störkante zur Anfachung der Turbulenz angeordnet sein.

Bei stark verschleißenden Fördergütern läßt sich die Scheibe als ein Zylinder ausbilden, der mit einer düsenartigen Bohrung versehen ist.

Eine weitere Beeinflussung der Bildung von Wirbeln in der Förderleitung ergibt sich aus der Möglichkeit, die Auslaß- und Einlaßöffnungen nach verschiedenen Seiten auszurichten, so daß sich in der Förderleitung bogenförmige Luftströmungen ergeben. In diesem Sinne trägt es auch bei, wenn in der Förderleitung mehrere Innenrohre mit Scheiben angeordnet sind, wobei die Öffnungen an den Scheiben nach verschiedenen Seiten hin gerichtet sind, zusätzlich noch in axialer Richtung versetzt zueinander angeordnet sein können und/ oder mit verschiedenen Anschnittwinkeln zur Rohrachse versehen sind. Optimale Strömungsverhältnisse lassen sich in diesem Fall auch in Abhängigkeit von der Art des Fördergutes erreichen, wenn das Innenrohr höhenverstellbar in dem Förderrohr gelagert ist.

Nach einer weiteren Ausgestaltung der Erfindung ist vorgesehen, zwischen dem Innenrohr und der Oberseite der Förderleitung Schottwände im Abstand anzuordnen, um zu verhindern, daß in dem Freiraum zwischen zwei Innenrohren und insbesondere über diesen Luft mit hoher Geschwindigkeit durchströmt, welche nicht zur eigentlichen Förderung des Schüttgutes und seiner Verwirbelung während der Förderung maßgeblich beiträgt.

Eine weitere Ausgestaltung der Erfindung sieht vor, seitlich am Innenrohr kleine flügelartige Ansätze anzubringen, die nach dem aus dem Flugzeugbau bekannten Effekt des VORTEX-Generators Turbulenzen erzeugen. Aufgrund der geringen Geschwindigkeiten von Fördermedium und Förder gut, mit denen die Vorrichtung gemäß der Erfindung arbeitet, ist ein Verschleiß dieser Ansätze nicht gegeben, sie gestatten jedoch, den Abstand der Öffnungen im Nebenrohr zu vergrößern.

Auch die erfindungsgemäße Anordnung kann nicht ausschließen, daß beispielsweise beim Ausfall eines Kompressors für die Förderluft sich in der Förderleitung ein durchgehender Gutspfropfen bildet. Um diesen auflösen zu können, lassen sich zusätzliche Anschlußleitungen vorsehen, die nach einem Sperren der vorausliegenden Leitungsabschnitte ein Auflösen eines Pfropfens durch eine zusätzliche Druckluftzufuhr ermöglichen. Ein derartiger Vorgang läßt sich durch geeignete technische Hilfsmittel automatisieren und mit selbstadaptierenden Reglern steuern.

Ausführungsbeispiele der Erfindung sind nachstehend unter Bezugnahme auf eine Zeichnung erläutert. In der Zeichnung zeigen:
Figur 1: Eine Förderleitung mit Innenrohr im Längsschnitt;
Figur 2: einen Teilausschnitt einer Förderleitung mit einer Lochscheibe;
Figur 3: einen Teilausschnitt einer Förderleitung mit einer von einer Muffe gehaltenen Lochscheibe und einer an der Außenseite der Muffe angeordneten Störkante.
Figur 4: eine Ausführung gemäß Figur 3 in abgewandelter Form Form;

Figur 5: einen Teilausschnitt einer Förderleitung mit vergrößerter Austrittsöffnung;

Figur 6: eine Förderleitung mit einem düsenförmigen Zylinder anstelle der sonst so bezeichneten Scheibe;

Figur 7: einen Querschnitt der Förderleitung in schematischer Darstellung mit seitlich am Innenrohr angeordneten flügelartigen Ansätzen in der Art von VORTEX-Generatoren.

Figur 8: eine Lochscheibe mit zwei Löchern;

Figur 9: eine Scheibe mit zwei schlitzförmigen Öffnungen;

Figur 10: eine Förderleitung im Querschnitt mit zwei Innenrohren im Bereich der Austrittsöffnungen und

Figur 11: eine Förderleitung im Querschnitt mit zwei Innenrohren im Bereich der Eintrittsöffnungen und

Figur 12: eine Förderleitung mit einem Absperrventil und einer Anschlußleitung.

In der Zeichnung ist eine Förderleitung 1 zum pneumatischen oder hydraulischen Fördern eines staubförmigem, pulvrigem oder körnigem Schüttgutes wiedergegeben, in dem ein Innenrohr 2 im oberen Abschnitt liegend angeordnet ist. Das Schüttgut wird im wesentlichen in der Förderleitung 1 gefördert und zwar möglichst unter Vermeidung von Gutspfropfen durch Bildung von Wirbeln in dem Fördermittel. Dafür sind in dem Innenrohr 2 Auslaßöffnungen 3 angeordnet, durch die das Fördermittel aus dem Innenrohr 2 in die Förderleitung zum Hervorrufen von Wirbeln austreten kann. Hinter jeder Auslaßöffnung 3 befindet sich eine Einlaßöffnung 4 in dem Innenrohr 2. Zwischen diesen beiden Öffnungen 3 und 4 steht in dem Innenrohr eine Scheibe 5, die mit einer Öffnung 6 versehen ist, so daß nicht das gesamte Fördermedium aus dem Innenrohr an der Stelle der Öffnungen aus dem Innenrohr 2 in die Förderleitung 1 eintritt.

Beim Betrieb der Vorrichtung bildet sich auf dem Boden der Förderleitung 1 eine Schicht A aus von Fördergut, die als ruhend angenommen werden kann. Darüber liegt eine fortlaufend fließende Schicht B, die in Pfeilrichtung vorwiegend angeschoben wird vom Staub in der Förderluft. In dieser Schicht befindet sich die Hauptmenge des Fördergutes und zwar etwa 2/3 bis 3/4 desselben. Darüber befindet sich die Schicht C als eigentliche Luftströmung, die Staub des Fördergutes mit sich führt und zwar aufgrund der durch die Scheiben 5 hervorgerufenen Turbulenzen wesentlich mehr Staub mit sich führt als es bisher möglich erschien.

Die Scheiben 5 sind durch Schrauben 7 höhenverstellbar. Das Innenrohr 2 ist in seinem Abstand gegenüber der Förderleitung durch Distanzhalter 8 gehalten.

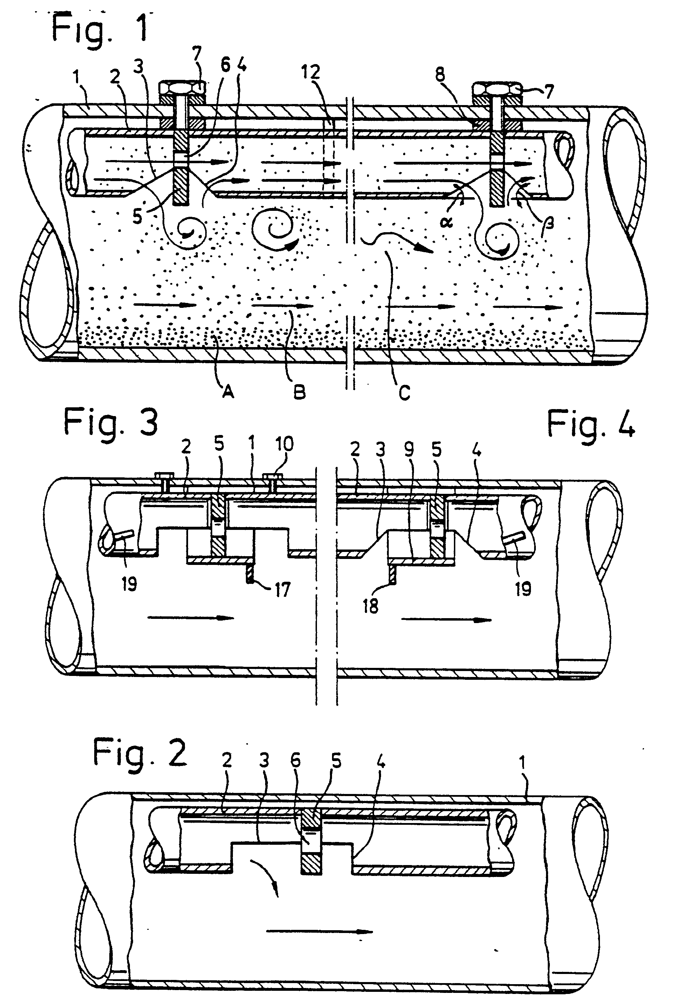

In der Ausführung nach Figur 1 sind die Auslaßöffnungen 3 und die Einlaßöffnungen 4 durch schräge Anschnitte des Innenrohres ausgebildet. Der Anschnittwinkel α der Auslaßöffnung 3 ist kleiner, etwa 30°, als der Anschnittwinkel β der Einlaßöffnung 4, der etwa 45° beträgt, so daß die Auslaßöffnung 3 nicht nur größer ist als die Einlaßöffnung, sondern die aus dem Innenrohr 2 austretende Förderluft zum Zwecke der stärkeren Verwirbelung in Richtung des Hauptstromes in der Förderleitung 1 austritt und dadurch einen langen Auflockerungsweg hervorruft.

Bei der Anordnung nach Figur 2 ist die Scheibe 5 mit der Öffnung 6 außermittig angeordnet, so daß die Auslaßöffnung 3 ebenfalls größer ist als die Einlaßöffnung 4.

Die Figur 3 zeigt eine Scheibe 5, die in einer Muffe 9 gehalten ist. In die Muffe 9 sind die beiden Endabschnitte des Innenrohres 2 eingesteckt. Das Innenrohr 2 ist durch Schrauben 10 höhenverstell-bar gegenüber der Förderleitung 1. Die Ein- und Auslaßöffnungen sind dabei gleich groß in Abweichung zu der Anordnung von Figur 4, bei welcher die Auslaßöffnung 3 wiederum größer ist als die Einlaßöffnung 4 durch eine außermittige Anordnung der Scheibe 5 innerhalb der Muffe 9.

Die vorteilhafte Anordnung einer Störkante 17 bzw. 18 an der Muffe ist in den Figuren 3 und 4 dargestellt.

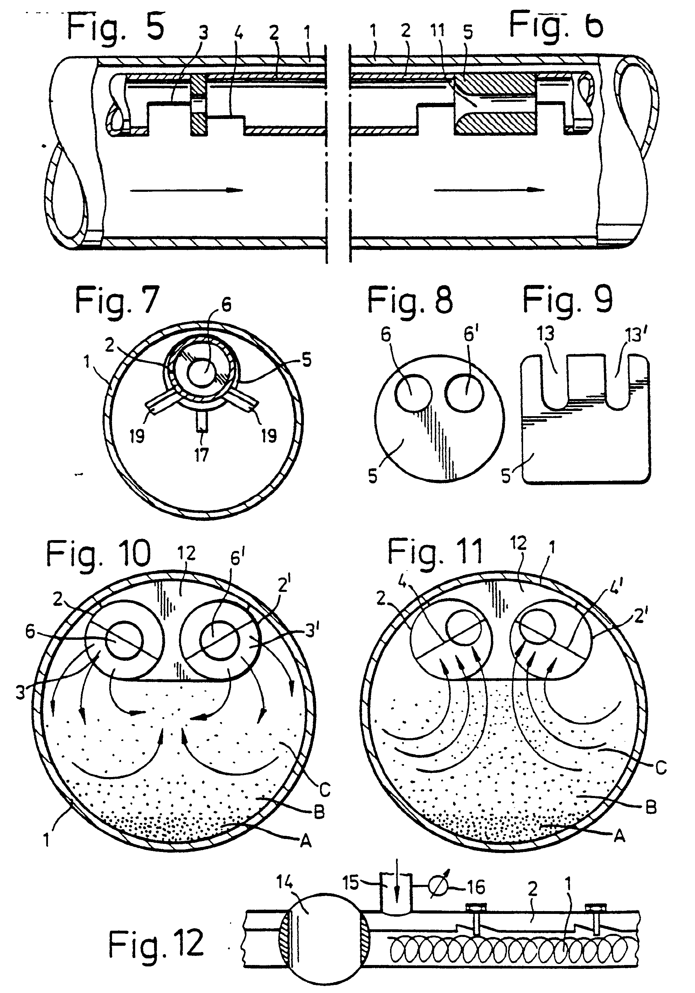

In der Figur 5 ist ein Beispiel wiedergegeben, bei dem die Auslaßöffnung 3 tiefer eingeschnitten ist in das Innenrohr 2 als die kleinere Einlaßöffnung 4.

Figur 6 zeigt eine zylinderförmige Scheibe 5 mit einer düsenförmigen Öffnung 11. Diese Ausbildung wird bevorzugt angewandt bei der Förderung besonders schleißender Güter.

Entsprechend der Figur 7 kann eine Scheibe 5 in ihrem Durchmesser größer gehalten sein, als das Innenrohr Nach Figur 8 kann sie auch mit mehreren Öffnungen 6 und 6' versehen sein, die dort exentrisch angeordnet sind, wie auch die Schlitze 13 und 13' in der Scheibe 5 entsprechend Figur 9.

Die Figur 7 zeigt die an der Außenseite des Innenrohres angeordneten VORTEX-Generatoren 19, in der Art von flügelförmigen Ansätzen, die zur Verlängerung des Abstandes der Ein- und Austrittsöffnungen angeordnet werden.

Gemäß den Figuren 10 und 11 lassen sich in einer Förderleitung 1 zwei oder mehrere Innenrohre 2 und 2' anordnen, bei denen die Auslaßöffnungen 3 und 3' schräg zur Seite gerichtet sind zur Förderung der Durchwirbelung.

Dementsprechend können gemäß Figur 11 auch die Einlaßöffnungen 4 und 4' in entgegengesetzter Richtung ausgerichtet sein.

Bei einigen Fördergütern wird erfindungsgemäß die Einlaßöffnung gegenüber der Auslaßöffnung um bis zum 180° verdreht angeordnet.

Erkennbar ist weiterhin, daß zwischen den beiden Innenrohren 2 und 2' und über diesen Schottwände 12 angeordnet sein können.

Um bei einem unbeabsichtigten Auftreten von festsitzenden Gutspfropfen in der Förderleitung 1 deren Auflösung zu erwirken, sind gemäß Figur 12 an das Innenrohr im Abstand angeordnete Anschlußleitungen 15 angeschlossen vor denen jeweils ein Absperrventil 14 liegt. Die von einem Regler 16 gesteuerte Anschlußleitung 15 erlaubt die zusätzliche Zuführung von Druckluft in das Innenrohr 2, durch welche ein Aufspalten eines Gutspfropfen automatisch erfolgen kann.

## Patentansprüche

1. Vorrichtung zum pneumatischen oder hydraulischen Fördern von staubförmigem, pulverigem oder körnigem Schüttgut, bestehend aus einer Förderleitung (1) mit einem darin angeordneten achsparallelverlaufenden Innenrohr (2), das mit Auslaß- und Einlaßöffnungen (3, 4) versehen ist, dadurch gekennzeichnet, daß in dem Innenrohr (2) zwischen einer Auslaß- und einer Einlaßöffnung eine senkrecht stehende Scheibe (5) angeordnet ist, die mit mindestens einer Öffnung (6) versehen ist.

2. Vorrichtung nach Anspruch 1, dadurch gekennzeichnet, daß die Öffnung (6) aus einem kreisrunden Loch besteht, das in der Mitte der Scheibe (5) angeordnet ist.

3. Vorrichtung nach Anspruch 1, dadurch gekennzeichnet, daß die Öffnung (6) aus einem Schlitz (13, 13') besteht.

4. Vorrichtung nach Anspruch 1, dadurch gekennzeichnet, daß die Öffnung (8) aus mehreren Löchern (6, 6') besteht.

5. Vorrichtung nach Anspruch 1, dadurch gekennzeichnet, daß die Öffnung (6) eine Größe von 0,1 - 0,3 der Innenrohrfläche aufweist.

6. Vorrichtung nach Anspruch 1, dadurch gekennzeichnet, daß die Scheibe (5) höhenverstellbar ist.

7. Vorrichtung nach Anspruch 1, dadurch gekennzeichnet, daß die Scheibe (5) einen größeren Durchmesser als das Innenrohr (2, 2') aufweist.

8. Vorrichtung nach Anspruch 1, dadurch gekennzeichnet, daß die Scheibe (5) außermittig zwischen der Auslaßund der Einlaßöffnung (3, 4) angeordnet ist.

9. Vorrichtung nach Anspruch 1, dadurch gekennzeichnet, daß die Scheibe (5) auswechselbar im Innenrohr (2) befestigt ist.

10. Vorrichtung nach Anspruch 1, dadurch gekennzeichnet, daß die Scheiben (5) in einem Abstand angeordnet sind der dem 1,5 - 4-fachen des Durchmessers der Förderleitung (2) entspricht.

11. Vorrichtung nach Anspruch 1, dadurch gekennzeichnet, daß die Scheibe (5) eine Muffe (9) trägt, mit der die freien Enden von Innenrohrabschnitten verbunden sind.

12. Vorrichtung nach Anspruch 1, dadurch gekennzeichnet, daß die Offnung (6) düsenförmig ausgebildet ist.

13. Vorrichtung nach Anspruch 1, dadurch gekennzeichnet, daß die Auslaßöffnung (3) vor der Scheibe (5) größer ist als die Einlaßöffnung (4) hinter der Scheibe (5).

14. Vorrichtung nach Anspruch 1, dadurch gekennzeichnet, daß der Anschnittwinkel (α) in der Auslaßöffnung (3) im Innenrohr (2) kleiner ist als der Anschnittwinkel (β) der Einlaßöffnung (4).

15. Vorrichtung nach Anspruch 1, dadurch gekennzeichnet, daß die Aus- und Einlaßöffnungen (3, 4) nach verschiedenen Seiten des Innenrohres (2) ausgerichtet sind.

16. Vorrichtung nach Anspruch 1, dadurch gekennzeichnet, daß in der Förderleitung (1) mehrere Innenrohre (2, 2') mit Scheiben (5) angeordnet sind und die nebeneinanderstehenden Scheiben (5) nach verschiedenen Seiten gerichtete Öffnungen (3, 3', 4, 4') aufweisen.

17. Vorrichtung nach Anspruch 1, dadurch gekennzeichnet, daß die Scheiben von zwei Innenrohren (2, 2') axial zueinander versetzt angeordnet sind.

18. Vorrichtung nach Anspruch 1, dadurch gekennzeichnet, daß zwischen dem Innenrohr (2) und dem oberen Teil der Förderleitung (1) Schottwände (12) angeordnet sind.

19. Vorrichtung nach Anspruch 1, dadurch gekennzeichnet, daß die Förderleitung (1) und das Innenrohr (2) mit Absperrventilen (14) versehen sind, hinter denen jeweils eine absperrbare Anschlußleitung (15) an das Innenrohr (2) angeschlossen ist.

20. Vorrichtung nach Anspruch 1, dadurch gekennzeichnet, daß entlang dem Innenrohr (2) an dessen Seiten kleine flügelartige Ansätze (19) angebracht sind.

21. Vorrichtung nach Anspruch 1 und 11, dadurch gekennzeichnet, daß an der Außenseite der Muffen (3) Störkanten (17, 18) angeordnet sind.

## Claims

1. Pneumatic and hydraulic conveying installation for transporting dusty, powdery or grained bulk materials consisting of a conveyor line (1) with an internal pipe (2) placed in it, running parallely to the axis and which is provided with outlets and inlets (3, 4), characterized in that a vertical standing disk (5), which is provided with at least one opening (6) is placed in the internal pipe between an outlet and an inlet.

2. Installation according to claim 1, characterized in that the opening (6) consists of a circular hole which is provided in the middle of the disk (5).

3. Installation according to claim 1, characterized in that the opening (6) consists of a slit (13, 13').

4. Installation according to claim 1, characterized in that the opening (6) consists of several holes (6, 6').

5. Installation according to claim 1, characterized in that the size of the opening (6) corresponds to 0,1-0,3 times the surface of the internal pipe.

6. Installation according to claim 1, characterized inthat the height of the disk (5) can be adjusted.

7. Installation according to claim 1, characterized in that the disk (5) presents a bigger diameter than the internal pipe (2, 2').

8. Installation according to claim 1, characterized in that the disk (5) is placed off-center between the outlet and the inlet (3, 4).

9. Installation according to claim 1, characterized in that the disk (5) is attached in the internal pipe (2) so as to be replaceable.

10. Installation according to claim 1, characterized in that the disks (5) are placed at a distance which corresponds to 1,5-4 times the diameter of the conveyor line (2).

11. Installation according to claim 1, charcterized in that the disk (5) bears a muff (9) which connects the free ends of parts of the internal pipe.

12. Installation according to claim 1, characterized in that the opening (6) is formed as a nozzle.

13. Installation according to claim 1, characterized in that the outlet (3) ahead of the disk (5) is bigger than the inlet (4) behind the disk (5).

14. Installation according to claim 1, characterized in that the lead angle ($\alpha$) in the outlet (3) of the internal pipe (2) is smaller than the lead angle ($\beta$) of the inlet (4).

15. Installation according to claim 1, characterized in that the outlets and inlets (3, 4) are orientated to different sides of the internal pipe (2).

16. Installation according to claim 1, characterized in that several internal pipes (2, 2') with disks (5) are placed in the conveyor line (1) and that the adjacent disks (5) have openings (3, 3', 4, 4') which are orientated to different sides.

17. Installation according to claim 1, characterized in that the disks of two internal pipes (2, 2') are placed axially misaligned the one to the other.

18. Installation according to claim 1, characterized in that bulkhead walls (12) are placed between the internal pipe (2) and the upper part of the conveyor line (1).

19. Installation according to claim 1, characterized in that the conveyor line (1) and the internal pipe (2) are provided with shut-off valves (14) behind which respectively one connecting line (15), which can be shut off, is connected to the internal pipe (2).

20. Installation according to claim 1, characterized in that small wing-type heels (19) are attached along the internal pipe (2) to its sides.

21. Installation according to claims 1 and 11, characterized in that interfering edges (17, 18) are placed on the external side of the muffs (9).

## Revendications

1. Installation de transport pneumatique et hydraulique de matériaux en vrac en poussière, en poudre ou en grains, comportant une tuyauterie de transport (1) comprenant un tuyau interne (2) placé à l'intérieur de celle-ci dans le sens parallèle à l'axe et qui est pourvu d'orifices de sortie et d'entrée (3, 4), caractérisée en ce qu'un disque (5), qui est pourvu d'au moins un orifice (6), se trouve placé dans le sens vertical dans le tuyau interne (2) entre un orifice de sortie et un orifice d'entrée.

2. Installation selon la revendication 1, caractérisée en ce que l'orifice (6) est constitué par un trou circulaire situé au milieu du disque (5).

3. Installation selon la revendication 1, caractérisée en ce que l'orifice (6) est constitué par une fente (13, 13').

4. Installation selon la revendication 1, caractérisée en ce que l'orifice (6) est constitué par plusieurs trous (6, 6').

5. Installation selon la revendication 1, caractérisée en ce que l'orifice (6) présente une taille qui est de 0, 1 à 0,3 fois la surface du tuyau interne.

6. Installation selon la revendication 1, caractérisée en ce que le disque (5) est de hauteur variable.

7. Installation selon la revendication 1, caractérisée en ce que le disque (5) a un diamètre supérieur à celui du tuyau interne (2, 2').

8. Installation selon la revendication 1, caractérisée en ce que le disque (5) est placé de façon excentrique entre l'orifice de sortie et l'orifice d'entrée (3, 4).

9. Installation selon la revendication 1, caractérisée en ce que le disque (5) est fixé dans le tuyau interne (2) de manière à pouvoir être remplacé.

10. Installation selon la revendication 1, caractérisée en ce que les disques (5) sont placés à une distance qui est de 1,5 à 4 fois le diamètre de la tuyauterie de transport (2).

11. Installation selon la revendication 1, caractérisée en ce que le disque (5) porte un manchon (9) qui relie les extrémités libres des portions de tuyau interne.

12. Installation selon la revendication 1, caractérisée en ce que l'orifice (6) est formé en forme de tuyère.

13. Installation selon la revendication 1, caractérisée en ce que l'orifice de sortie (3) devant le disque (5) est plus grand que l'orifice d'entrée (4) derrière le disque (5).

14. Installation selon la revendication 1, caractérisée en ce que l'angle d'attaque ($\alpha$) de l'orifice de sortie (3) du tuyau interne (2) est plus petit que l'angle d'attaque ($\beta$) de l'orifice d'entrée (4).

15. Installation selon la revendication 1, caractérisée en ce que les orifices d'entrée et de sortie (3, 4) sont orientés vers des côtés différents du tuyau interne (2).

16. Installation selon la revendication 1, caractérisée en ce que plusieurs tuyaux internes (2, 2') avec des disques (5) sont placés dans la tuyauterie de transport (1) et que les disques (5) situés les uns à côté des autres présentent des orifices (3, 3', 4, 4') orientés vers des côtés différents.

17. Installation selon la revendication 1, caractérisée en ce que les disques de deux tuyaux internes (2, 2') sont placés de manière décalée axialement l'un par rapport à l'autre.

18. Installation selon la revendication 1, caractérisée en ce que des cloisons étanches (12) sont placées entre le tuyau interne (2) et la partie supérieure de la tuyauterie de transport (1).

19. Installation selon la revendication 1, caractérisée en ce que la tuyauterie de transport (1) et le tuyau interne (2) sont pourvus de soupapes d'arrêt (14) derrière lesquelles une conduite de raccord (15) pouvant être fermée est respectivement raccordée au tuyau interne (2).

20. Installation selon la revendication 1, caractérisée en ce que des petits épaulements (19) du type ailette sont fixés le long du tuyau interne (2) sur ses côtés.

21. Installation selon les revendications 1 et 11, caractérisée en ce que des arêtes de perturbation (17, 18) sont placées sur la face extérieure des manchons (9).

# Fig. 1

# Fig. 3

# Fig. 4

# Fig. 2

Fig. 5

Fig. 6

Fig. 7

Fig. 8

Fig. 9

Fig. 10

Fig. 11

Fig. 12

3